# EUROPEAN PATENT APPLICATION

(11) **EP 3 244 340 A1**
(43) Date of publication of application: **15.11.2017**
(21) Application number: 16305534.6
(22) Date of filing: 09.05.2016
(51) Int. Cl.: G06F 21/72, G06F 21/74, G06Q 20/32, H04L 9/32, G06Q 20/36

(54) **METHOD FOR SECURELY RUNNING AN APPLICATION**

(71) Applicant: GEMALTO SA, 92190 Meudon (FR)
(72) Inventor: DELSUC, Julien, 13881 GEMENOS Cedex (FR); COGNIAUX, Geoffroy, 13881 GEMENOS Cedex (FR)

(57) **Abstract**

The invention is a method for running an application in a processing unit. The application comprises applicative data and an executable code which are stored in a memory belonging to the processing unit. The application is designed to run according to a workflow execution. The processing unit is embedded in a device which embeds a secure element distinct from the processing unit. The method comprises the following steps:
- the processing unit executes the executable code and the secure element runs an engine which has access to both secret data and a state machine reflecting the workflow execution of the application,
- the engine takes control of execution of the application by the processing unit by determining a further task to be executed by the processing unit according to the state machine, freely accesses the applicative data in the memory and performs a ciphering/deciphering operation of a subset of the applicative data using the secret data, the ciphering/deciphering operation being triggered by the engine on its own initiative according to the state machine.

## Description

### (Field of the invention)

The present invention relates to methods for securely running an application in a processing unit. It relates particularly to methods of running an application in a processing unit which may be considered as an untrusted environment.

### (Background of the invention)

Secure elements are small devices comprising a memory, a microprocessor and an operating system for computing treatments. Such secure elements may comprise a plurality of memories of different types, like nonvolatile memory and volatile memory. They are called "secure" because they are able to control the access to the data they contain and to authorize or not the use of data by other machines. The secure elements may also provide computation services based on cryptographic components. In general, secure elements have limited computing resources and limited memory resources and they are intended to be connected to a host machine which provides them with electric power. Secure elements may be removable or fixed to a host machine. For example, smart cards are a kind of secure elements.

Generally speaking, a processing unit is a device able to run software applications. A large number of processing units are not designed to withstand attacks aiming at changing the behavior of their software applications. Thus, many processing units provide an untrusted executing environment and are considered as non-tamper-resistant devices.

There is a need to improve the level of security while running a software application in a processing unit.

### (Summary of the Invention)

An object of the invention is to solve the above mentioned technical problem.

The object of the present invention is a method for running an application in a processing unit. The application comprises applicative data and an executable code which are stored in a memory belonging to the processing unit. The application is designed to run according to a workflow execution by using the applicative data. The processing unit is embedded in a device which embeds a secure element distinct from the processing unit. The method comprises the following steps:
- the processing unit executes the executable code and the secure element runs an engine, said engine having access to both secret data and a state machine reflecting the workflow execution of said application,
- the engine takes control of execution of the application by the processing unit by determining a further task to be executed by the processing unit according to the state machine, freely accesses the applicative data in the memory and performs a ciphering/deciphering operation of a subset of said applicative data using the secret data, said ciphering/deciphering operation being triggered by the engine on its own initiative according to the state machine.

Advantageously, the engine may retrieve a subset of the executable code, may check integrity of the subset and may perform the ciphering/deciphering operation only if the integrity checking is successful.

Advantageously, the engine may directly access the memory through a hardware link.

Advantageously, the engine may access the memory through an intermediary software agent located in the processing unit.

Advantageously, the processing unit may execute the executable code and the secure element may run the engine partly in parallel.

Another object of the invention is a device including a processing unit which comprises a memory storing both applicative data and an executable code which belong to an application. The application is designed to run according to a workflow execution by using the applicative data. The device comprises a secure element distinct from the processing unit. The processing unit is configured to execute the executable code. The secure element is configured to run an engine which has access to both secret data and a state machine reflecting the workflow execution of the application. The engine is configured to take control of execution of the application by the processing unit by determining a further task to be executed by the processing unit according to the state machine. The engine is configured to freely access the applicative data in the memory and to perform a ciphering/deciphering operation of a subset of the applicative data using the secret data. The engine is configured to trigger on its own initiative the ciphering/deciphering operation according to the state machine.

Advantageously, the engine may be adapted to retrieve a subset of the executable code, to check integrity of the subset and to perform said ciphering/deciphering operation only in case of successful integrity checking.

Advantageously, the secure element may be configured to run the engine in parallel of the execution of the executable code by the processing unit.

Advantageously, the engine may be configured to directly access the memory through a hardware link.

Advantageously, the engine may be configured to access the memory through an intermediary software agent located in the processing unit.

### (Brief description of the drawings)

Other characteristics and advantages of the present invention will emerge more clearly from a reading of the following description of a number of preferred embodiments of the invention with reference to the corresponding accompanying drawings in which:
- Figure 1 shows an exemplary flow diagram of application execution according to the invention,
- Figure 2 shows a diagram of a device comprising both a processing unit and a secure element according to an example of the invention, and
- Figure 3 shows an exemplary flow diagram of execution of a software application in a processing unit according to the invention.

### (Detailed description of the preferred embodiments)

The invention may apply to any type of device comprising both a secure element and a processing unit intended to run a software application. Such device (also called host machine) may be a smartphone, a tablet, a smart watch, a vehicle, a meter, a slot machine, a TV or a computer.

According to the invention, the secure element acts as a master which takes control of execution of the software application in the processing unit.

According to the invention, the secure element does not proceed enciphering and deciphering on demand of the processing unit (as in usual systems). The secure element decides on its own initiative when to proceed enciphering and deciphering thanks to a state machine.

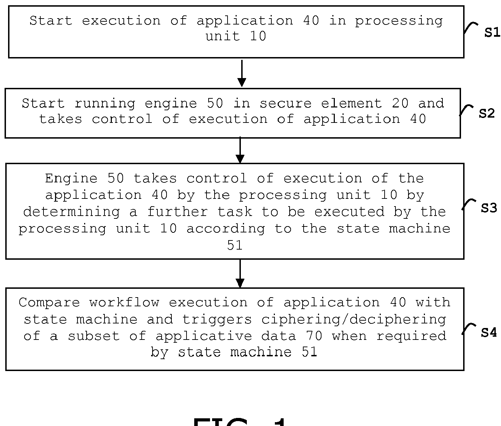

**Figure 1** shows an example of a flow diagram for running a software application in a device according to the invention.

A device 15 comprises both a secure element 20 and a processing unit 10. For instance, the processing unit 10 may be a chip including both a memory and a processing component. In another example, the processing unit 10 may be any computer part based on a microcontroller or a microprocessor.

An application 40 comprises both applicative data 70 and an executable code 60 which are stored in the memory belonging to the processing unit 10. The application 40 is designed to run according to a workflow execution by using the applicative data 70.

The secure element comprises an engine 50 which has access to both secret data 52 and a state machine 51 that reflects the workflow execution of the application 40. The engine 50 is able to freely access the data and code stored in the memory of the processing unit 10.

The engine can be implemented as a software application.

At step S1, the processing unit 10 starts execution of the application 40 (i.e. execution of the executable code 60).

At step S2, the secure element (20) starts running the engine.

At step S3, the engine 50 takes control of execution of the application 40 by the processing unit 10 by determining a further task to be executed by the processing unit 10 according to the state machine 51.

At step S4, the engine 50 performs a ciphering/deciphering operation of a subset of the applicative data 70 using the secret data 52. This ciphering/deciphering operation is triggered by the engine 50 on its own initiative according to the state machine 51. Thus the service of ciphering/deciphering is not requested by the processing unit when running the application 40 as made in prior art solutions.

Advantageously, during the step S4, the engine 50 may retrieve a subset 61 of the executable code 60 and check integrity of this subset 61. The engine may be configured to perform the ciphering/deciphering operation on the subset of the applicative data 70 only if the integrity check of the subset 61 of the executable code 60 is successful. Thus the engine can check that the executable code 60 has not been modified in the processing unit 10.

In the example of Figure 1, the execution of the executable code 60 by the processing unit 10 and the running of the engine 50 are sequential.

In another example, the processing unit 10 may execute the executable code 60 of the application and the secure element 20 may run the engine 50 partly in parallel. Such simultaneous executions allows to optimize the time execution of the whole software application 40.

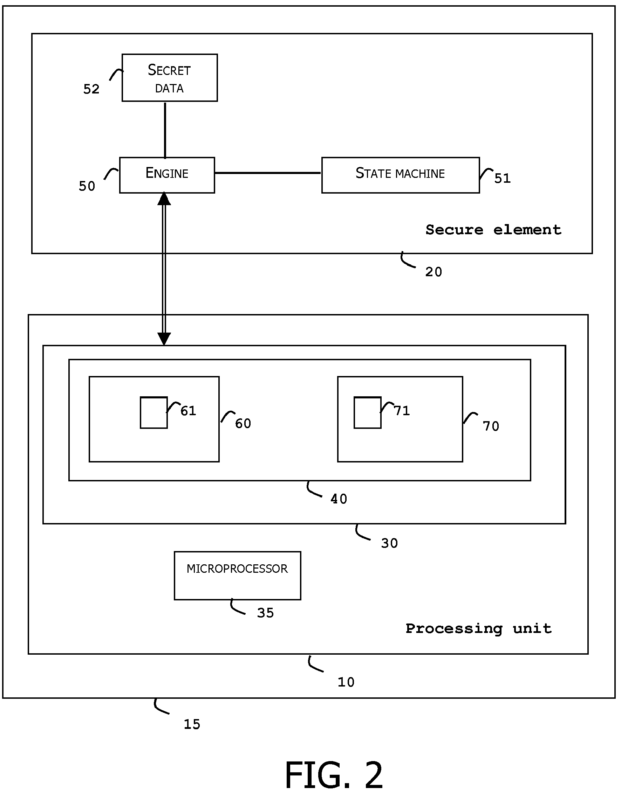

**Figure 2** shows an example of diagram of a device comprising both a processing unit and a secure element according to an example of the invention.

In this example, the device 15 is an energy meter and the secure element 20 is a smart card (or a hardware component comprising a firmware acting as a smart card) comprising a communication interface (not shown) configured to exchange data with the processing unit 10 via a bus SPI (Synchronous Peripheral Interface). In another example, the secure element 20 may communicate through the SWP (Single Wire Protocol) protocol.

It is to be noted that the processing unit 10 and the secure element 20 are two distinct components.

The processing unit 10 comprises a memory 30 and a microprocessor 35. The memory 30 can be a flash memory.

The application 40 is stored in the memory 30 of the processing unit 10. The application 40 comprises both an executable code 60 and applicative data 70. The applicative data 70 may include counter, parameter value, and transaction log for instance. The executable code 60 may be implemented in any managed languages but not limited to. For instance it may be implemented in Java®. Executable code 60 could be also implemented in any compiled languages if it can be split by-design into well-delimited blocks of code where each block represents a step in a workflow.

The application is designed to run according to a workflow execution by using its applicative data 70.

The processing unit 10 is able to execute the application 40 (i.e. the executable code 60).

The secure element 20 comprises an engine 50, a state machine 51 and a secret data 52.

The engine may be implemented as a software component or a combination of hardware and firmware parts. Preferably, the engine comprises a part designed to run cryptographic algorithms. Alternatively, the engine may have access to a crypto component (like a crypto-coprocessor) embedded in the secure element 20 and able to run cryptographic algorithms.

The secret data 52 is preferably stored in the memory of the secure element 20. The secret data may be one or several secret keys or any secret information allowing to complete the required ciphering/deciphering operations.

The state machine 51 contains a description which reflects the workflow execution of the application 40. The state machine 51 (also called "finite-state machine") may be implemented as a mathematical model of computation of the targeted application 40. It may be described as an abstract machine that can be in one of a finite number of states. The state machine 51 is in only one state (called the current state) at a time. It can change from one state to another when initiated by a triggering event or condition. This change is called a transition. In one embodiment, the state machine 51 can be defined by a list of its states and the triggering condition for each transition.

The secure element has a processor able to run the engine 50. The engine 50 can access both the secret data 52 and the state machine 51. The engine 50 is designed to take control of running of the application 40 executed by the processing unit 10. The engine 50 is designed to determine a further task to be executed by the processing unit 10 according to the state machine 51. The engine 50 can freely access the application data (both applicative data 70 and executable code 60) in the memory 30 of the processing unit 10. In other words, the engine can freely read and write data in the memory 30. The engine 50 can perform (or delegate to a co-processor) any ciphering/deciphering operations of a subset 71 of the applicative data 70 using the secret data 52. The engine 50 is configured to trigger on its own initiative the ciphering/deciphering operation according to the state machine 51.

In a preferred embodiment, the engine 50 is designed to retrieve a subset 61 of the executable code 60, to check integrity of this subset 61 and to perform the ciphering/deciphering operation (of subset 71 of the applicative data 70) only in case of successful integrity checking.

In one embodiment, the engine 50 is configured to directly access the memory 30 through a hardware link. Alternatively, the engine 50 may be configured to access the memory 30 through an intermediary software agent (not shown at Figure 2) located in the processing unit 10.

In one example, the secure element 20 may be configured to run the engine 50 (partly) in parallel of the execution of the executable code 60 by the processing unit 10 so as to reduce the time required for the execution of the application 40.

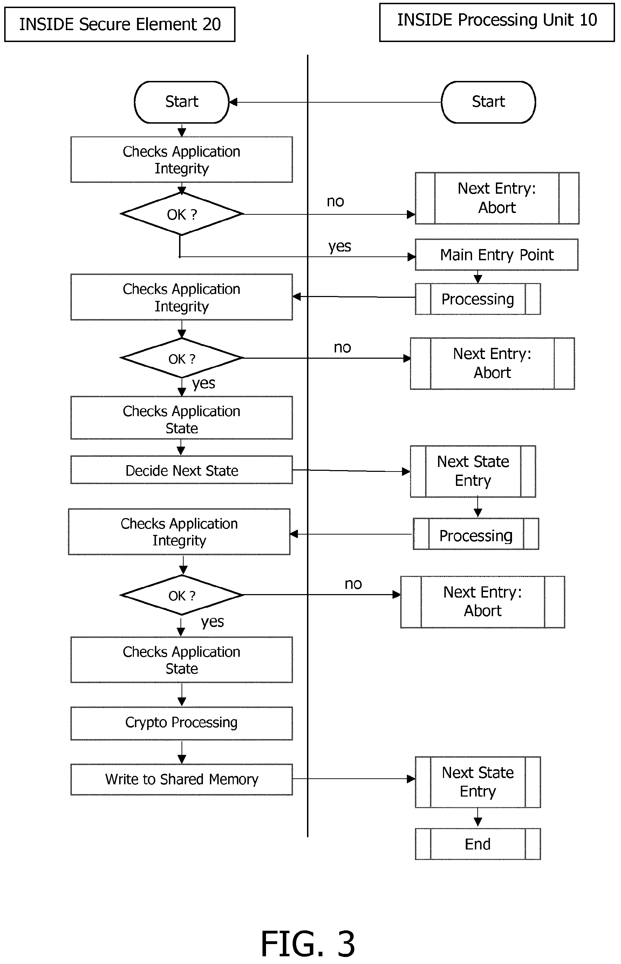

**Figure 3** shows an example of flow diagram of execution of a software application in a processing unit according to the invention.

First the application 40 is started in the processing unit 10. The starting of the execution of the application 40 triggers the starting of execution of the engine 50 in the secure element. In one example, the engine 50 and the application 40 communicate through a software library which allows the executable code 60 to send requests to the engine 50 and to receive the corresponding responses from the engine 50. In this case, the communication between the engine 50 and the application 40 operates as in distributed applications using communication protocols likes RPC (Remote Procedure Call) or others.

In another example, the engine 50 may connect to the debug connector (like JTAG for instance) of the processing unit 10. Thus, the engine 50 can get control of the application 40 execution.

Then the engine 50 performs a first integrity checking of a first subset of the execution code 60 of the application 40. The integrity checking may be carried out through a checking of a hash of a subset of the execution code 60, assuming that the engine 50 has access to the reference hash value corresponding to the selected subset of the execution code 60. Thus the engine 50 can compare the computed hash with the reference hash value.

In another example, the integrity checking may be carried out through a checking of the plain value of a subset of the execution code 60, assuming that the engine 50 has access to the reference plain value corresponding to the selected subset of the execution code 60. Thus the engine 50 can compare the read value with the reference plain value.

In a further example, the integrity checking may be carried out through unitary test where the engine 50 calls one or several preset functions of the processing unit 10 and checks that the corresponding responses match predefined values.

The functions that are tested may be a subset of the overall code. Those functions must be selected for their criticality in the overall application.

In case of error, the engine provides an Abort entry to the processing unit 10 for stopping the execution of the application 40 on the processing unit 10. In case of successful integrity checking, the engine identifies (thanks to the state machine 51) the next task to be executed by the processing unit 10 and triggers the processing unit 10 by providing the corresponding "Main entry point". Then the processing unit 10 processes the task and returns control to the engine 50.

Then the engine 50 performs a second integrity checking of a second subset of the execution code 60 of the application 40.

In case of error, the engine provides an Abort entry to the processing unit 10 for stopping the execution of the application 40 on the processing unit 10. In case of successful integrity checking, the engine checks the current application state and identifies (by comparing the current application state with the state machine 51) the next task to be executed by the processing unit 10. Then the engine 50 triggers the processing unit 10 by providing it with the corresponding "next state entry".

Then the processing unit processes the task and returns control to the engine 50.

Then the engine 50 performs a third integrity checking of a third subset of the execution code 60 of the application 40.

In case of error, the engine provides an Abort entry to the processing unit 10 for stopping the execution of the application 40 on the processing unit 10. In case of successful integrity checking, the engine checks the current application state and identifies (thanks to the state machine 51) the next task to be executed. In this example, the next task is the ciphering of a subset of applicative data 70 and the subsequent task is to be processed by the processing unit 10. The engine 50 performs the ciphering operation by calling a crypto processing on secure element side. Then the engine 50 writes the ciphered data in the memory 30 of the processing unit. It is to be noted that this memory 30 appears to be shared between the processing unit 10 and the secure element 20.

Then the engine 50 triggers the processing unit 10 by providing the corresponding "Next State Entry". In the example of Figure 3, the processing unit 10 processes the task and completes the execution of the application.

The invention allows to establish a strong symbiosis between a secure element and a processing unit. If the secure element is extracted from the hosting device, it cannot be used for data ciphering/deciphering without the relevant processing unit. Conversely, if the processing unit is extracted from the hosting device, it cannot be used without the relevant secure element.

The invention is not limited to the described embodiments or examples. In particular, the features described in the presented embodiments and examples may be combined.

The invention is well-suited for combining processing units which are powerful but untrusted and secure elements which have constrained resources but are trusted.

## Claims

1. A **method** for running an application (40) in a processing unit (10), said application (40) comprising applicative data (70) and an executable code (60) which are stored in a memory (30) belonging to the processing unit (10), said application (40) being designed to run according to a workflow execution by using the applicative data (70),
**characterized in that** the processing unit (10) is embedded in a device (15) which embeds a secure element (20) distinct from the processing unit (10) and **in that** the method comprises the following steps:
- the processing unit (10) executes the executable code (60) and the secure element (20) runs an engine (50), said engine (50) having access to both secret data (52) and a state machine (51) reflecting the workflow execution of said application (40),
- the engine (50) takes control of execution of the application (40) by the processing unit (10) by determining a further task to be executed by the processing unit (10) according to the state machine (51), freely accesses the applicative data (70) in the memory (30) and performs a ciphering/deciphering operation of a subset (71) of said applicative data (70) using the secret data (52), said ciphering/deciphering operation being triggered by the engine (50) on its own initiative according to the state machine (51).

2. A method according to claim 1, wherein the engine (50) retrieves a subset (61) of the executable code (60), checks integrity of the subset (61) and performs said ciphering/deciphering operation only if the integrity checking is successful.

3. A method according to claim 1, wherein said engine (50) directly accesses the memory (30) through a hardware link.

4. A method according to claim 1, wherein said engine (50) accesses the memory (30) through an intermediary software agent located in the processing unit (10).

5. A method according to claim 1, wherein said processing unit (10) executes the executable code (60) and said secure element (20) runs the engine (50) partly in parallel.

6. A **device** (15) including a processing unit (10) which comprises a memory (30) storing both applicative data (70) and an executable code (60) which belong to an application (40), said application (40) being designed to run according to a workflow execution by using the applicative data (70),
**characterized in that** the device (15) comprises a secure element (20) distinct from the processing unit (10), **in that** said processing unit (10) is configured to execute the executable code (60), **in that** the secure element (20) is configured to run an engine (50), **in that** said engine (50) has access to both secret data (52) and a state machine (51) reflecting the workflow execution of said application (40), **in that** the engine (50) is configured to take control of execution of the application (40) by the processing unit (10) by determining a further task to be executed by the processing unit (10) according to the state machine (51), to freely access the applicative data (70) in the memory (30) and to perform a ciphering/deciphering operation of a subset (71) of said applicative data (70) using the secret data (52), and **in that** said engine (50) is configured to trigger on its own initiative the ciphering/deciphering operation according to the state machine (51).

7. A device (15) according to claim 6 wherein the engine (50) is adapted to retrieve a subset (61) of the executable code (60), to check integrity of the subset (61) and to perform said ciphering/deciphering operation only in case of successful integrity checking.

8. A device (15) according to claim 6 wherein the secure element (20) is configured to run the engine (50) in parallel of the execution of the executable code (60) by the processing unit (10).

9. A device (15) according to claim 6 wherein said engine (50) is configured to directly access the memory (30) through a hardware link.

10. A device (15) according to claim 6 wherein said engine (50) is configured to access the memory (30) through an intermediary software agent located in the processing unit (10).
